# EUROPÄISCHE PATENTSCHRIFT

(11) **EP 2 687 282 B1**
(45) Veröffentlichungstag und Bekanntmachung des Hinweises auf die Patenterteilung: **26.09.2018**
(21) Anmeldenummer: 13172232.4
(22) Anmeldetag: 17.06.2013
(51) Int. Cl.: B01D 53/22, C01B 3/50

(54) **VERFAHREN ZUM ABSCHEIDEN VON WASSERSTOFF AUS EINEM WASSERSTOFFHALTIGEN GASGEMISCH IN EINER MEMBRAN MIT HOHEM SPÜLGASDRUCK UND VORRICHTUNG ZUR DURCHFÜHRUNG DIESES VERFAHRENS**
METHOD FOR SEPARATING HYDROGEN FROM A HYDROGEN-CONTAINING GAS MIXTURE IN A MEMBRANE WITH HIGH SWEEP GAS PRESSURE AND DEVICE FOR CARRYING OUT THIS METHOD
PROCÉDÉ DE SÉPARATION D'HYDROGÈNE À PARTIR D'UN MÉLANGE GAZEUX CONTENANT DE L'HYDROGÈNE PAR MEMBRANE EN UTILISANT UN GAZ DE BALAYAGE DE HAUTE PRESSION ET DISPOSITIF PERMETTANT DE METTRE EN OEUVRE CE PROCÉDÉ

(30) Priorität: 19.07.2012 DE 102012212708
(43) Veröffentlichungstag der Anmeldung: 22.01.2014
(73) Patentinhaber: ThyssenKrupp Marine Systems GmbH, 24143 Kiel (DE)
(72) Erfinder: KRUMMRICH, Dipl.-Ing. Stefan, 24634 Padenstedt (DE)
(74) Vertreter: thyssenkrupp Intellectual Property GmbH

(56) Entgegenhaltungen:
- WO-A2-2010/056829
- WO-A2-2013/033529
- DE-T2- 60 201 179

## Beschreibung

Die Erfindung betrifft ein Verfahren zum Abscheiden von Wasserstoff aus einem wasserstoffhaltigen Gasgemisch und eine Vorrichtung zum Abscheiden von Wasserstoff aus einem wasserstoffhaltigen Gasgemisch.

Bei Unterseebooten zählt es zum Stand der Technik, dort zur Stromversorgung des Bordnetzes verwendete Brennstoffzellen mittels eines Methanol-Reformers mit Wasserstoff als Brennstoff zu versorgen. Ein für Unterseeboote zu aufwändiges Verfahren zeigt die WO 2010/056829. Da der den Brennstoffzellen zugeführte Wasserstoff eine sehr hohe Reinheit aufweisen muss, ist es üblich, dem Methanol-Reformer eine wasserstoffpermeable Membran nachzuschalten, in der der Wasserstoff von den übrigen im Reformat enthaltenen Gasbestandteilen getrennt wird.

Diese Membran ist derart auszuführen, dass der vergleichsweise hohe Reformatdruck von ungefähr 30 bar eingangsseitig der Membran nicht zu Leckagen und/oder Beschädigungen an der Membran führt. Eine in diesem Zusammenhang bekannte Maßnahme besteht darin, der Membran durch Wahl einer vergleichsweise großen Wandstärke eine ausreichend hohe mechanische Stabilität zu verleihen, sodass die Membran dem hohen Reformatdruck standhalten kann. Nachteilig steht dem allerdings entgegen, dass mit einer Vergrößerung der Wandstärke die Permeabilität der Membran abnimmt und die Kosten für die Membran aufgrund der vergleichsweise teuren Membranmaterialien,
wie z. B. Palladium, steigen. Insofern wird bevorzugt angestrebt, Membranen mit einer möglichst geringen Wandstärke zu verwenden. Ein in diese Richtung zielender Lösungsansatz besteht darin, eine sehr dünne Membran mit einer beispielsweise keramischen Trägerstruktur zu versehen, die der Membran dann die erforderliche mechanische Stabilität verleiht. Allerdings hat sich auch diese Lösung nicht als befriedigend erwiesen, da die unterschiedlichen Wärmeausdehnungskoeffizienten von Membran- und Trägerstrukturmaterial häufig zu einer Ablösung von Teilen der Membran von der Trägerstruktur und damit einhergehend zu nicht akzeptablen Verunreinigungen des Wasserstoffpermeats führen.

Vor diesem Hintergrund liegt der Erfindung die Aufgabe zugrunde, ein Verfahren zum Abscheiden von Wasserstoff aus einem wasserstoffhaltigen Gasgemisch zur Verfügung zu stellen, bei dem eine möglichst dünnwandige wasserstoffpermeable Membran verwendet werden kann, ohne dass sich dies nachteilig auf den Reinheitsgrad des die Membran verlassenden Wasserstoffs oder auf das Verschleißverhalten auswirkt. Eine weitere Aufgabe der Erfindung besteht darin, eine Vorrichtung zur Durchführung dieses Verfahrens zu schaffen.

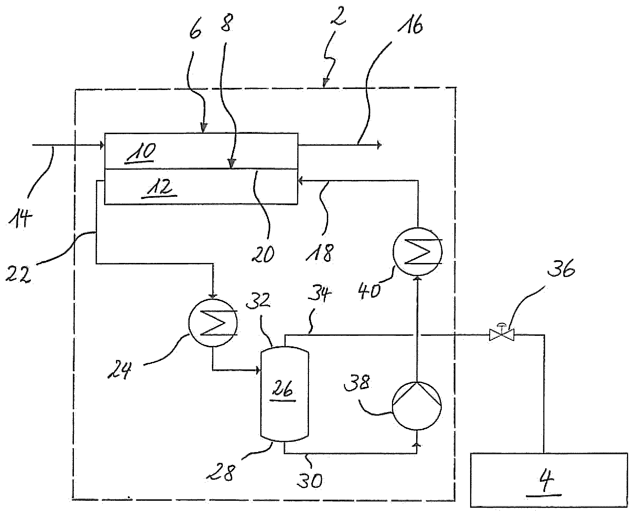

Gelöst wird die das Verfahren betreffende Teilaufgabe der Erfindung durch ein Verfahren zum Abscheiden von Wasserstoff aus einem wasserstoffhaltigen Gasgemisch mit den in Anspruch 1 angegebenen Merkmalen, während die die Vorrichtung betreffende Teilaufgabe der Erfindung durch eine Vorrichtung zum Abscheiden von Wasserstoff aus einem wasserstoffhaltigen Gasgemisch mit den in Anspruch 4 angegebenen Merkmalen gelöst wird. Vorteilhafte Weiterbildungen des Verfahrens nach Anspruch 1 sowie vorteilhafte Weiterbildungen der Vorrichtung nach Anspruch 4 ergeben sich aus den diesbezüglichen Unteransprüchen, der nachfolgenden Beschreibung sowie der Zeichnung.

Das erfindungsgemäße Verfahren zum Abscheiden von Wasserstoff aus einem wasserstoffhaltigen Gasgemisch zeichnet sich dadurch aus, dass eine zum Abscheiden des Wasserstoffs verwendete wasserstoffpermeable Membran an ihrer Permeatseite mit einem Spülgasdruck beaufschlagt wird, welcher größer als der Druck des Gasgemisches zufuhrseitig der Membran ist. D. h. an der Permeatseite der Membran wird mittels eines Spülgases, welches vorteilhaft keinen Wasserstoff enthält, gegenüber der Zufuhrseite der Membran ein Überdruck erzeugt. Bei einer Beschädigung der Membran verhindert dieser Überdruck, dass Gase, bei denen es sich nicht um Wasserstoff handelt, von der Zufuhrseite der Membran auf deren Permeatseite gelangen können. Eine Beschädigung der Membran führt lediglich dazu, dass an einer Leckagestelle der Membran Spülgas von der Permeatseite zu der Zuführseite der Membran gelangen kann. Vorteilhaft kann auf diese Weise ein hoher Reinheitsgrad des an der Membran abgeschiedenen Wasserstoffs gewährleistet werden. Des Weiteren hat die Verwendung von Spülgas auf der Permeatseite der Membran den positiven Effekt, dass hierdurch der Wasserstoffpartialdruck permeatseitig der Membran gesenkt wird, was zur Folge hat, dass sich die aus dem Gasgemisch gewinnbare Wasserstoffmenge erhöht. Besonders vorteilhaft wird die durch die Spülgasbeaufschlagung der Permeatseite der Membran erzeugte Druckdifferenz zwischen der Permeatseite und der Zufuhrseite der Membran vergleichsweise gering gehalten, sodass die Membran einer verhältnismäßig geringen mechanischen Belastung unterliegt. Diese geringe Belastung ermöglicht es, vergleichsweise dünnwandige und damit kostengünstige Membranen zu verwenden.

Aufgrund der Druckbeaufschlagung der Permeatseite der Membran liegt permeatseitig der Membran typischerweise ein Gasgemisch aus Wasserstoff und Spülgas vor. Zur Gewinnung von Wasserstoff hoher Reinheit ist es daher erforderlich den Wasserstoff und das Spülgas wieder voneinander zu trennen. Eine solche Trennung ist in besonders einfacher Weise möglich, wenn Wasserdampf als Spülgas verwendet wird. In diesem Fall erfolgt die Trennung des Wasserstoffs von dem Wasserdampf dadurch dass das Wasser durch Kondensation von dem dampfförmigen in den flüssigen Zustand überführt wird. Insbesondere dann, wenn der an der Membran abgeschiedene Wasserstoff als Brennstoff für eine PEM-Brennstoffzelle verwendet wird, erweist es sich weiter als vorteilhaft, dass die Membran der Brennstoffzelle durch den Wasserdampf befeuchtet wird.

Bevorzugt wird das Spülgas im Gegenstrom zum Strom des Gasgemisches eingangsseitig der Membran geführt. Demzufolge wird die Permeatseite der Membran von dem Spülgas vorzugsweise in entgegengesetzter Richtung zu einem Strom des Gasgemisches an der Zufuhrseite der Membran angeströmt. Diese Vorgehensweise hat eine weitere Vergrößerung der aus dem Gasgemisch abgeschiedenen Wasserstoffmenge zur Folge und ermöglicht bestenfalls die vollständige Abscheidung des Wasserstoffs aus dem Gasgemisch.

Wie bereits angemerkt, ist es zur Erzielung von Wasserstoff hoher Reinheit erforderlich, das Spülgas von dem Wasserstoff zu trennen. Zweckmäßigerweise wird diese Trennung ausgangsseitig eines permeatseitig an die Membran angrenzenden Raumes, d. h. in gewisser Entfernung von der Membran, vorgenommen. Handelt es sich bei dem Spülgas, wie es vorgesehen ist, um Wasserdampf, erfolgt die Trennung zweckdienlich durch Abkühlen des Gemisches aus Wasserstoff und Dampf, wodurch der dampfförmig vorliegende Stoff in seine flüssige Phase überführt wird, und auf diese Weise leicht von dem nach wie vor gasförmig vorliegenden Wasserstoff getrennt werden kann.

Besonders vorteilhaft kann das Spülgas nach der Trennung von dem Wasserstoff wieder zur Druckbeaufschlagung der Permeatseite der Membran verwendet werden. Dementsprechend ist vorgesehen, das Spülgas, nachdem es von dem Wasserstoff getrennt worden ist, in einem vorzugsweise geschlossenen Kreislauf wieder zu der Membran zurückzuführen, so dass die Permeatseite der Membran mit dem selben Spülgas in einem Zirkulationsprozess immer wiederkehrend mit Druck beaufschlagt wird. Typischerweise ist es in diesem Zusammenhang erforderlich, das bei der Trennung von dem Wasserstoff verflüssigte Spülgas durch Verdampfung und Überhitzung wieder in einen stabilen gasförmigen Zustand zu überführen und das Spülgas auf ein solches Druckniveau zu bringen, dass der von dem Spülgas auf die Permeatseite der Membran ausgeübte Druck größer als derjenige Druck ist, der von dem Gasgemisch auf die Gegenseite der Membran ausgeübt wird.

Die erfindungsgemäße Vorrichtung zum Abscheiden von Wasserstoff aus einem wasserstoffhaltigen Gasgemisch weist eine Membraneinrichtung auf. In dieser Membraneinrichtung trennt eine wasserstoffpermeable Membran, die vorzugsweise aus Palladium oder aus einer Palladiumlegierung ausgebildet ist, bevorzugt einen geschlossenen Zufuhrraum von einem ebenfalls geschlossenen permeatseitigen Raum. An dem Zufuhrraum sind ein Gaseinlass für das Gasgemisch und ein Gasauslass für das Retentat ausgebildet. An dem permeatseitigen Raum ist ein Gasauslass für den die Membran durchdringenden Wasserstoff ausgebildet. Gemäß der Erfindung weist die Membraneinrichtung permeatseitig der Membran darüber hinaus auch einen Spülgaseinlass und eine Druckgasquelle auf. Von der Druckgasquelle wird das Spülgas unter einem Druck, der größer als der auf der Zufuhrseite der Membran wirkende Druck des Gasgemisches ist, über den Spülgaseinlass in den permeatseitig der Membran ausgebildeten Raum der Membraneinrichtung eingeleitet. Bei der Druckgasquelle kann es sich sowohl um einen Druckgasspeicher handeln, in welchem das Spülgas unter entsprechend hohem Druck gespeichert ist, oder, wie es bevorzugt vorgesehen ist, um einen Druckgaserzeuger, wie einen Verdichter oder einen Verdampfer handeln.

Bevorzugt ist bei der erfindungsgemäßen Vorrichtung ein permeatseitiger Teil der Membraneinrichtung Teil eines Spülgaskreislaufs. In diesem Fall ist der Gasauslass, über den der Wasserstoff zusammen mit dem Spülgas aus der Membraneinrichtung abgeleitet wird, mit dem Spülgaseinlass der Membraneinrichtung leitungsverbunden.

Da bei dem erfindungsgemäßen Verfahren zur Abscheidung von Wasserstoff aus einem wasserstoffhaltigen Gasgemisch vorzugsweise Wasserdampf als Spülgas verwendet wird, ist der Spülgaskreislauf der erfindungsgemäßen Vorrichtung hiermit korrespondierend ein Wasserkreislauf.

Das Spülgas und der Wasserstoff verlassen bei der erfindungsgemäßen Vorrichtung die Membraneinrichtung gemeinsam an dem Gasauslass, der an dem permeatseitigen Raum ausgebildet ist. Ausgangsseitig dieses Gasauslasses ist es daher erforderlich, den Wasserstoff von dem Spülgas zu trennen. Zu diesem Zweck ist vorteilhaft abströmseitig des Gasauslasses der Membraneinrichtung ein Kondensator angeordnet. In diesem Kondensator wird das Gemisch aus Wasserstoff und Wasserdampf soweit abgekühlt, dass das Wasser in seinen flüssigen Aggregatzustand übergeht, während der Wasserstoff weiter gasförmig vorliegt.

Zur räumlichen Trennung des Wasserstoffs von dem flüssigen Wasser weist die erfindungsgemäße Vorrichtung weiter vorteilhaft einen abströmseitig des Kondensators angeordneten Separator mit einem Wassersauslass und einem Wasserstoffauslass auf. Bei dem Separator kann es sich gemäß einer besonders einfachen Ausgestaltung um ein geschlossenes hohlzylindrisches Gefäß handeln, in dem sich an einem in Schwerkraftrichtung unten angeordneten Boden das flüssige Wasser und darüber der Wasserstoff sammeln. Bei diesem Gefäß ist der Wasserauslass zweckmäßigerweise an dem Boden und dort vorzugsweise an einem tiefsten Punkt angeordnet. Der Wasserstoffauslass kann besonders vorteilhaft an der von dem Boden abgewandten Decke des Gefäßes angeordnet sein.

Um das Wasser von dem Separator kreislaufmäßig wieder in Richtung der Membraneinrichtung transportieren zu können, ist zweckmäßigerweise ausgangsseitig des Auslasses des Separators eine Förderpumpe angeordnet. D. h. das Wasser wird von dem Separator aus zunächst mittels der Förderpumpe im flüssigen Zustand in Richtung des Spülgasanschlusses der Membraneinrichtung gefördert und überdies auf das Druckniveau gebracht, das zur Druckbeaufschlagung der Permeatseite der Membran erforderlich ist.

Bevor das Wasser in die Membraneinrichtung eingeleitet wird, ist es allerdings erforderlich, dieses wieder in den dampfförmigen Zustand zu versetzen. Zu diesem Zweck ist vorteilhaft ausgangsseitig der Förderpumpe eine Verdampfungseinrichtung angeordnet. In der Verdampfungseinrichtung wird dem Wasser vorzugsweise so viel Wärme zugeführt, dass das Wasser ausgangsseitig der Verdampfungseinrichtung als überhitzter Wasserdampf vorliegt.

Nachfolgend ist die Erfindung anhand eines in der Zeichnung dargestellten Ausführungsbeispiels näher erläutert. Die Zeichnung zeigt in einer stark vereinfachten Prinzipskizze eine Vorrichtung zum Abscheiden von Wasserstoff aus einem wasserstoffhaltigen Gasgemisch.

Die dargestellte Vorrichtung 2 zum Abscheiden von Wasserstoff aus einem wasserstoffhaltigen Gasgemisch dient dazu, mindestens eine Brennstoffzelle 4 mit Wasserstoff als Brennstoff zu versorgen. Hauptbestandteil der Vorrichtung 2 ist eine Membraneinrichtung 6. Diese Membraneinrichtung 6 wird von einer wasserstoffpermeablen Membran 8, die aus Palladium ausgebildet ist, in einen geschlossenen Zufuhrraum 10 und einen permeatseitigen, ebenfalls geschlossenen Raum 12 geteilt.

An dem Zufuhrraum 10 ist ein Gaseinlass 14 ausgebildet. Über den Gaseinlass 14 wird ein wasserstoffhaltiges Gasgemisch in den Zufuhrraum 10 geleitet. In dem Zufuhrraum 10 durchdringt der in dem Gasgemisch enthaltene Wasserstoff die Membran 8 und gelangt so in den Raum 12. Die übrigen Bestandteile des Gasgemisches können die Membran 8 nicht durchdringen und verbleiben als Retentat in dem Zufuhrraum 10, aus dem sie über einen Gasauslass 16 abgeleitet werden.

An dem permeatseitigen Raum 12 ist ein Spülgaseinlass 18 ausgebildet. Dieser Spülgaseinlass 18 dient dazu, Wasserdampf als Spülgas in den Raum 12 zu leiten und dort die Permeatseite 20 der Membran 8 mit einem Druck zu beaufschlagen, der größer als der Druck ist, der von dem Gasgemisch in dem Zufuhrraum 10 auf die Membran 8 ausgeübt wird. Der Spülgaseinlass 18 ist derart angeordnet, dass der Wasserdampf durch den Raum 12 im Gegenstrom zu dem Strom des Gasgemisches in dem Zufuhrraum 10 geführt wird. Über einen an dem Raum 12 ausgebildeten Gasauslass 22 wird der an der Membran 8 von dem Gasgemisch abgeschiedene Wasserstoff zusammen mit dem Wasserdampf aus der Membraneinrichtung 6 abgeführt.

Um den Wasserstoff von dem Wasserdampf trennen zu können, ist abströmseitig des Gasauslasses 22 ein Kondensator 24 angeordnet. Ausgangsseitig des Kondensators 24 ist ein Separator 26 angeordnet, in dem das in dem Kondensator 24 verflüssigte Wasser von dem Wasserstoff getrennt wird. Hierzu ist an dem Separator 26 an einem in Schwerkraftrichtung unteren Boden 28 ein Wasserauslass 30 und an einer dem Boden 28 gegenüberliegenden Decke 32 ein Wasserstoffauslass 34 ausgebildet.

Abströmseitig des Wasserstoffauslasses 34 ist die mit dem Wasserstoff zu versorgende Brennstoffzelle 4 angeordnet. Um den Wasserstoffeingangsdruck an der Brennstoffzelle 4 zu regeln, ist in der Leitungsverbindung zwischen dem Wasserstoffauslass 34 und der Brennstoffzelle 4 ein Druckregelventil 36 angeordnet.

An dem Wasserauslass 30 des Separators 26 schließt sich abströmseitig eine Förderpumpe 38 an. Ausgangsseitig der Förderpumpe 38 ist ein Verdampfer 40 angeordnet. Der Verdampfer 40 ist abströmseitig mit dem Spülgaseinlass 18 der Membraneinrichtung 6 leitungsverbunden.

Die Funktionsweise der dargestellten Vorrichtung 2 zum Abscheiden von Wasserstoff aus einem wasserstoffhaltigen Gasgemisch ist wie folgt:
Über den Gaseinlass 14 wird ein wasserstoffhaltiges Gasgemisch in den Zufuhrraum 10 der Membraneinrichtung 6 geleitet. Bei diesem Gasgemisch kann es sich z. B. um das Reformat eines Methanol-Reformers handeln. In der Membraneinrichtung 6 durchdringt der in dem Gasgemisch enthaltene Wasserstoff die Membran 8 und gelangt in den permeatseitigen Raum 12 der Membraneinrichtung 6. Die übrigen Bestandteile des Gasgemisches werden von der Membran 8 aufgehalten und verbleiben in dem Zufuhrraum 10, aus dem sie über den Gasauslass 16 abgeleitet werden.

Während der Zufuhrraum 10 von dem Gasgemisch durchströmt wird, wird der permeatseitige Raum 12 der Membraneinrichtung 6 von Wasserdampf als Spülgas durchströmt, welches über den Spülgaseinlass 18 in den Raum 12 gelangt. In dem Raum 12 wird die Permeatseite 20 der Membran 8 von dem Wasserdampf mit Druck beaufschlagt. Dieser Druck ist größer als der von dem Gasgemisch auf die Gegenseite der Membran 8 ausgeübte Druck und hat zur Folge, dass Bestandteile des Gasgemisches, bei denen es sich nicht um Wasserstoff handelt, bei eventuell vorhandenen Leckagestellen an der Membran 8 über diese von dem Zufuhrraum 10 in den Raum 12 gelangen können.

Über den Gasauslass 22 wird der von dem Gasgemisch abgeschiedene Wasserstoff zusammen mit dem Wasserdampf aus dem Raum 12 der Membraneinrichtung 6 abgeleitet und zu einem Kondensator 24 geführt, in dem das zuvor dampfförmig vorliegende Wasser verflüssigt wird. In einem abströmseitig des Kondensators 24 angeordneten Separator 26 wird der gasförmige Wasserstoff über den an dem Separator 26 ausgebildeten Wasserstoffauslass 34 als Brennstoff zu der Brennstoffzelle 4 geleitet. Das flüssige Wasser, das sich am Boden 28 des Separators 26 gesammelt hat, wird über den dort ausgebildeten Wasserauslass 30 aus dem Separator 26 abgelassen und von der abströmseitig des Separators angeordneten Förderpumpe 38 zu einem Verdampfer 40 gefördert, wo ein überhitzter Wasserdampf erzeugt wird, der über den Spülgaseinlass 14 wieder kreislaufmäßig in den Raum 12 der Membraneinrichtung 6 eingeleitet wird.

### Bezugszeichenliste

- 2: - Vorrichtung
- 4: - Brennstoffzelle
- 6: - Membraneinrichtung
- 8: - Membran
- 10: - Zufuhrraum
- 12: - Raum
- 14: - Gaseinlass
- 16: - Gasauslass
- 18: - Spülgaseinlass
- 20: - Permeatseite
- 22: - Gasauslass
- 24: - Kondensator
- 26: - Separator
- 28: - Boden
- 30: - Wasserauslass
- 32: - Decke
- 34: - Wasserstoffauslass
- 36: - Druckregelventil
- 38: - Förderpumpe
- 40: - Verdampfer

## Patentansprüche

1. Verfahren zum Abscheiden von Wasserstoff aus einem wasserstoffhaltigen Gasgemisch, bei welchem Wasserstoff an einer wasserstoffpermeablen Membran (8) von dem übrigen Gasgemisch getrennt wird, mit den Schritten
Bereitstellen eines Methanol-Reformers und Zuführen des Reformats des Reformers der Membran (8),
wobei die Permeatseite (20) der Membran (8) mit einem Spülgasdruck beaufschlagt wird, welcher grösser oder gleich dem Druck des Gasgemisches eingangsseitig der Membran (8) ist, wobei als Spülgas Wasserdampf verwendet wird, welcher in einem abströmseitig der Permeatseite (20) der Membran (8) angeordneten Kondensator (24) verflüssigt und in einem ausgangsseitig des Kondensators (24) angeordneten Separator (26) von dem Wasserstoff getrennt wird, um als flüssiges Wasser einem Verdampfer (40) zur Erzeugung von überhitztem Wasserdampf bereitgestellt zu werden, welcher kreislaufförmig wieder in Richtung der Membran transportiert wird, und Versorgen einer Brennstoffzelle mit dem abgeschiedenen Wasserstoff und Regeln des Wasserstoffeingangsdrucks an der Brennstoffzelle über ein anströmseitig der Brennstoffzelle angeordnetes Druckregelventil (36).

2. Verfahren nach Anspruch 1, **dadurch gekennzeichnet, dass** das Spülgas im Gegenstrom zum Strom des Gasgemisches eingangsseitig der Membran (8) geführt wird.

3. Verfahren nach einem der vorangehenden Ansprüche, **dadurch gekennzeichnet, dass** der Wasserstoff ausgangsseitig eines permeatseitig an die Membran (8) angrenzenden Raums (12) von dem Spülgas getrennt wird.

4. Vorrichtung (2) zum Abscheiden von Wasserstoff aus einem wasserstoffhaltigen Gasgemisch, mit
einem Methanol-Reformer,
einer dem Reformer nachgeschalteten Membraneinrichtung (6), welche eine wasserstoffpermeable Membran (8) und permeatseitig der Membran (8) einen Spülgaseinlass (18) und eine Druckgasquelle aufweist,
wobei ein permeatseitiger Teil der Membraneinrichtung (6) Teil eines Wasserkreislaufs ist, bei dem abströmseitig eines permeatseitigen Gasauslasses (22) der Membraneinrichtung (6) ein Kondensator (24) und ausgangsseitig des Kondensators (24) ein Separator (26) mit einem Wasserauslass (30) und einem Wasserstoffauslass (34) und anströmseitig der Membraneinrichtung (6) eine Verdampfungseinrichtung (40) angeordnet ist und
einer Brennstoffzelle, die mit dem abgeschiedenen Wasserstoff über einen geregelten Wasserstoffeingangsdrucks über ein anströmseitig der Brennstoffzelle angeordnetes Druckregelventil (36) versorgt wird.

5. Vorrichtung (2) nach Anspruch 4, **dadurch gekennzeichnet, dass** ausgangsseitig des Wasserauslasses (30) eine Förderpumpe (38) angeordnet ist.

## Claims

1. Process for separating hydrogen from a hydrogen-containing gas mixture, wherein hydrogen is separated from the remaining gas mixture at a hydrogen-permeable membrane (8), having the steps
providing a methanol reformer and feeding the reformate from the reformer to the membrane (8),
where the permeate side (20) of the membrane (8) is subjected to a sweep gas pressure which is greater than or equal to the pressure of the gas mixture on the inlet side of the membrane (8), where water vapour is used as sweep gas and is liquefied in a condenser (24) arranged at the outflow end of the permeate side (20) of the membrane (8) and is separated from the hydrogen in a separator (26) arranged at the outlet end of the condenser (24) in order to be supplied as liquid water to a vaporizer (40) for generating superheated steam which is transported in a circulatory manner back in the direction of the membrane, and
supplying a fuel cell with the hydrogen which has been separated off and regulating the hydrogen inlet pressure at the fuel cell via a pressure regulating valve (36) arranged at the inflow end of the fuel cell.

2. Process according to Claim 1, **characterized in that** the sweep gas is conveyed in countercurrent to the stream of the gas mixture at the inlet side of the membrane (8).

3. Process according to either of the preceding claims, **characterized in that** the hydrogen is separated from the sweep gas at the outlet end of a space (12) adjoining the membrane (8) on the permeate side.

4. Apparatus (2) for separating hydrogen from a hydrogen-containing gas mixture, comprising
a methanol reformer,
a membrane device (6) which is arranged downstream of the reformer and has a hydrogen-permeable membrane (8) and on the permeate side of the membrane (8) a sweep gas inlet (18) and a pressurized gas source,
wherein a permeate-side part of the membrane device (6) is part of a water circuit in which a condenser (24) is arranged at the outflow end of a permeate-side gas outlet (22) of the membrane device (6) and a separator (26) having a water outlet (30) and a hydrogen outlet (34) at the outlet end of the condenser (24) and a vaporization device (40) is arranged at the inflow end of the membrane device (6), and
a fuel cell which is supplied with the hydrogen which has been separated off via a regulated hydrogen inlet pressure via a pressure regulating valve (36) arranged at the inflow end of the fuel cell.

5. Apparatus (2) according to Claim 4, **characterized in that** a feed pump (38) is arranged at the outlet end of the water outlet (30).

## Revendications

1. Procédé de séparation d'hydrogène à partir d'un mélange gazeux contenant de l'hydrogène, selon lequel l'hydrogène est séparé du mélange gazeux restant sur une membrane perméable à l'hydrogène (8), comprenant les étapes suivantes :
la préparation d'un reformeur de méthanol et l'introduction du reformat du reformeur dans la membrane (8),
le côté du perméat (20) de la membrane (8) étant chargé avec une pression de gaz de rinçage qui est supérieure ou égale à la pression du mélange gazeux du côté de l'entrée de la membrane (8), de la vapeur d'eau étant utilisée en tant que gaz de rinçage, qui est liquéfiée dans un condensateur (24) agencé en aval du côté du perméat (20) de la membrane (8) et séparée de l'hydrogène dans un séparateur (26) agencé du côté de la sortie du condensateur (24), afin d'être mise à la disposition d'un évaporateur (40) sous la forme d'eau liquide pour la formation de vapeur d'eau surchauffée, qui est de nouveau transportée en circuit dans la direction de la membrane, et l'alimentation d'une cellule à combustible avec l'hydrogène séparé et la régulation de la pression d'entrée d'hydrogène dans la cellule à combustible par une soupape de régulation de la pression (36) agencée en amont de la cellule à combustible.

2. Procédé selon la revendication 1, **caractérisé en ce que** le gaz de rinçage est acheminé à contre-courant du courant du mélange gazeux du côté de l'entrée de la membrane (8).

3. Procédé selon l'une quelconque des revendications précédentes, **caractérisé en ce que** l'hydrogène est séparé du gaz de rinçage du côté de la sortie d'une chambre (12) adjacente à la membrane (8) du côté du perméat.

4. Dispositif (2) pour la séparation d'hydrogène à partir d'un mélange gazeux contenant de l'hydrogène, comprenant :
un reformeur de méthanol,
un appareil à membrane (6) raccordé en aval du reformeur, qui comprend une membrane (8) perméable à l'hydrogène et, du côté du perméat de la membrane (8), une entrée de gaz de rinçage (18) et une source de gaz sous pression,
une partie du côté du perméat de l'appareil à membrane (6) faisant partie d'un circuit d'eau, dans lequel un condensateur (24) est agencé en aval d'une sortie de gaz (22) du côté du perméat de l'appareil à membrane (6) et un séparateur (26) est agencé du côté de la sortie du condensateur (24), avec une sortie d'eau (30) et une sortie d'hydrogène (34), et un appareil d'évaporation (40) est agencé en amont de l'appareil à membrane (6), et
une cellule à combustible, qui est alimentée avec l'hydrogène séparé par une pression d'entrée d'hydrogène régulée par une soupape de régulation de la pression (36) agencée en amont de la cellule à combustible.

5. Dispositif (2) selon la revendication 4, **caractérisé en ce qu'**une pompe de transport (38) est agencée du côté de la sortie de la sortie d'eau (30).
